(19) Europäisches Patentamt
European Patent Office
Office européen des brevets

(11) **EP 2 337 458 B1**

(12) **EUROPEAN PATENT SPECIFICATION**

(45) Date of publication and mention
of the grant of the patent:
**18.04.2018 Bulletin 2018/16**

(51) Int Cl.:
*A23L 9/20* (2016.01)     *A23L 9/10* (2016.01)
*A23P 30/40* (2016.01)     *A23C 9/154* (2006.01)
*A23G 1/52* (2006.01)     *A23G 1/56* (2006.01)
*A23P 10/22* (2016.01)     *A23P 10/40* (2016.01)
*A23L 29/10* (2016.01)

(21) Application number: **09744055.6**

(22) Date of filing: **08.10.2009**

(86) International application number:
**PCT/EP2009/007215**

(87) International publication number:
**WO 2010/043332 (22.04.2010 Gazette 2010/16)**

(54) **A WHIPPING AGENT**

AUFSCHLAGMITTEL

AGENT MOUSSANT

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **17.10.2008 EP 08018194**

(43) Date of publication of application:
**29.06.2011 Bulletin 2011/26**

(73) Proprietor: **Cognis IP Management GmbH
40589 Dusseldorf (DE)**

(72) Inventors:
• **KIELMEYER, Friedrich
89257 Illertissen (DE)**
• **SALACZ, Robert
89134 Blaustein (DE)**

• **REITLINGER, Christina
89335 Ichenhausen (DE)**

(74) Representative: **BASF IP Association
BASF SE
G-FLP-C006
67056 Ludwigshafen (DE)**

(56) References cited:
**EP-A- 0 579 328        EP-A- 1 369 041
WO-A-98/07329          GB-A- 2 131 669
US-A- 3 628 968        US-A1- 2004 062 846
US-A1- 2004 265 468      US-B1- 6 426 110**

• **S. W. Souci, W. Fachmann, H. Kraut: "Food
Composition and Nutritional Tables", 2000 pages
131-134,**
• **"Compositional Information - Lamequick CE
6630", 2015**

**Description**

The present invention relates to a whipping agent comprising (a) at least one fat, wherein the amount of fat present in the whipping agent is at least 20 % by weight, and wherein the fat is liquid at a temperature of 20 °C, and wherein the amount of unsaturated fatty acid moieties present in the fat is at least 50 % by weight of all fatty acid moieties present in the fat, (b) at least one protein, wherein the amount of protein present in the whipping agent is 3 to 10 % by weight of the whipping agent, and wherein the protein is selected from the group consisting of milk protein, a protein of plant origin, soy protein, casein, sodium caseinate, calcium caseinate, whey protein concentrate, soy protein hydrolysate, pea protein, wheat protein and potato protein, and (c) at least one emulsifier, wherein the at least one emulsifier is different from the at least one protein, and wherein the amount of all emulsifiers present in the whipping agent is at least 5 % by weight of the whipping agent, and wherein the emulsifier is selected from the group consisting of a monoglyceride of a fatty acid wherein the fatty acid is either saturated or unsaturated and wherein the fatty acid has 6 to 30 carbon atoms, a diglyceride of two fatty acids wherein both fatty acids, independently of each other, are either saturated or unsaturated and have 6 to 30 carbon atoms, a polyglycerol ester of a fatty acid wherein the fatty acid is either saturated or unsaturated and wherein the fatty acid has 6 to 30 carbon atoms (preferably a polyglycerol monostearate), an acetic acid ester of a monoglyceride of a fatty acid wherein the fatty acid is either saturated or unsaturated and wherein the fatty acid has 6 to 30 carbon atoms, a lactic acid ester of a monoglyceride of a fatty acid wherein the fatty acid is either saturated or unsaturated and wherein the fatty acid has 6 to 30 carbon atoms, a citric acid ester of a monoglyceride of a fatty acid wherein the fatty acid is either saturated or unsaturated and wherein the fatty acid has 6 to 30 carbon atoms, a diacetyl tartaric acid ester of a monoglyceride of a fatty acid wherein the fatty acid is either saturated or unsaturated and wherein the fatty acid has 6 to 30 carbon atoms, lecithin and any mixture of two or more of said emulsifiers, wherein the whipping agent is a powder.

Furthermore, the present invention relates to the use of the whipping agent for making an instant powder for making an instant powder dessert comprising the whipping agent, a process for making the whipping agent, and the use of the whipping agent for making a food that comprises a foam that is obtained by whipping.

Whipping agents are well-known products in the food industry. Whipping agents or aerating agents are typically spray-dried compositions comprising fat, one or more emulsifiers and protein. These products are found mainly in instant powder desserts. The dessert is prepared by adding a liquid to the instant powder and by whipping the resulting mixture with a mixer (e. g. Paradiescreme, a product sold by the company Dr. Oetker, Germany). The liquid can be milk or water or another liquid. Such instant formulations typically consist of sugar, a protein source like milk powder, hydrocolloids, coloring agents, flavoring agents and a whipping agent. A whipping agent is necessary in such a formulation so that it can be aerated and so that foam can be built up and so that the air bubbles in the foam are stabilized. The resulting foam is similar to whipped dairy cream. The difference is that no dairy cream is necessary.

Whipping agents can be used in formulations of powder desserts, ready-to-eat applications, cake fillings, decorating creams and other popular applications.

US 3628968 discloses a spray-dried whippable food composition prepared of (1) a polyglycerol partial ester of a higher fatty acid, (2) a carbohydrate from the group of starch, dextrin, gums, and sugars and/or fat and (3) acid whey.

WO 02/49445 discloses a powdered fat composition comprising crystallizing fat, proteins, an emulsifier, water and carbohydrates. EP 1 728 437 A1 discloses an acidic whipping cream comprising acid-soluble soybean protein.

EP 1 723 852 A1 discloses an aerated edible emulsion such as a whipped cream fortified with calcium and comprising at least 2 % by weight fat, wherein the fat comprises less than 20 % saturated fatty acids. The emulsion may comprise emulsifiers but is preferably substantially free from emulsifier (paragraph 0037). No powdered product comprising fat, emulsifier and protein is disclosed.

For whipping agents, mostly hydrogenated oils containing more than 90 % saturated fatty acids are used because of their positive impact on whippability, creaminess, mouth feel and texture of the foam obtainable by whipping. Fats like hydrogenated coconut oil or hydrogenated palm kernel oil may be used. They consist of nearly 100 % saturated fatty acids. Saturated fatty acids are believed to be an essential component of whipping agents in order to make it possible to provide the whipping agent in powder form and in order to give stability to the foam obtainable after whipping.

Saturated fatty acids, however, should not be present in high amounts in a healthy diet. Therefore, the problem underlying the present invention is to provide a whipping agent having a low content of saturated fatty acids but having good whipping properties.

Surprisingly, it has been found that saturated fatty acids are not an essential component of whipping agents. Surprisingly whipping agents containing oils like sunflower oil, soy bean oil or rape seed oil that contain a high amount of unsaturated fatty acids can have good whipping properties and a stabile foam can be obtained after whipping. Surprisingly whipping agents containing oils that contain a high amount of unsaturated fatty acids can be provided in powder form. This, of course, depends on the composition of the whipping agent and it depends on what other components are present in the whipping agent.

In more detail, the problem underlying the present invention is to define a formulation of a whipping agent that leads to good whipping properties that end users are used to get with known whipping agents containing hydrogenated fats and oils. At the same time, the formulation must not contain high amounts of saturated fatty acids. At the same time, it shall be possible to provide the whipping agent in powder form. This problem is solved by a whipping agent comprising at least one fat, at least one protein and at least one emulsifier, wherein the at least one emulsifier is different from the at least one protein, and wherein the amount of all emulsifiers present in the whipping agent is at least 5 % by weight, preferably at least 10 % by weight of the whipping agent, and wherein the amount of unsaturated fatty acid moieties present in the fat is at least 50 % by weight, more preferably at least 70 % by weight, more preferably at least 90 % by weight of all fatty acid moieties present in the fat, and wherein the amount of all protein present is 3 to 10 percent by weight of the whipping agent. This whipping agent is a subject of the present invention.

The whipping agent according to the present invention is a powder, preferably a powder obtainable by spray-drying.

Within the whipping agent according to the present invention the least one emulsifier is different from the at least one protein, and the emulsifier is selected from the group consisting of a monoglyceride of a fatty acid wherein the fatty acid is either saturated or unsaturated and wherein the fatty acid has 6 to 30 carbon atoms, a diglyceride of two fatty acids wherein both fatty acids, independently of each other, are either saturated or unsaturated and have 6 to 30 carbon atoms, a polyglycerol ester of a fatty acid wherein the fatty acid is either saturated or unsaturated and wherein the fatty acid has 6 to 30 carbon atoms (preferably a polyglycerol monoste`rat), an acetic acid ester of a monoglyceride of a fatty acid wherein the fatty acid is either saturated or unsaturated and wherein the fatty acid has 6 to 30 carbon atoms, a lactic acid ester of a monoglyceride of a fatty acid wherein the fatty acid is either saturated or unsaturated and wherein the fatty acid has 6 to 30 carbon atoms, a citric acid ester of a monoglyceride of a fatty acid wherein the fatty acid is either saturated or unsaturated and wherein the fatty acid has 6 to 30 carbon atoms, a diacetyl tartaric acid ester of a monoglyceride of a fatty acid wherein the fatty acid is either saturated or unsaturated and wherein the fatty acid has 6 to 30 carbon atoms, lecithin and any mixture of two or more of said emulsifiers.

The definition of the emulsifiers is to be understood as follows. The "a fatty acid" or the "fatty acids" is/are a mixture of fatty acids that fall under the definition given. E. g. "a monoglyceride of a fatty acid wherein the fatty acid is either saturated or unsaturated and wherein the fatty acid has 6 to 30 carbon atoms" can be a mixture of stearic acid monoglyceride and palmitic acid monoglyceride and further monoglycerides.

Within the whipping agent according to the present invention the at least one protein is selected from the group consisting of milk protein, a protein of plant origin, soy protein, casein, sodium caseinate, calcium caseinate, whey protein concentrate, soy protein hydolysate, pea protein, wheat protein and potato protein.

Within the whipping agent according to the present invention the fat is liquid at a temperature of 20°C; the fat is preferably selected from the group consisting of sunflower oil, soy bean oil, rape seed oil, olive oil, safflower oil and fish oil.

Within the whipping agent according to the present invention, the amount of the at least one protein present in the whipping agent is 3 to 10 % by weight (more preferably 4 to 10% by weight, more preferably 5 to 10 % by weight) of the whipping agent.

One embodiment of the present invention is the whipping agent according to the present invention, wherein the amount of fat present in the whipping agent is at least 20 % by weight (preferably at least 28 % by weight, more preferably at least 40 % by weight).

One embodiment of the present invention is the whipping agent according to the present invention further comprising mono potassium phosphate, dipotassium phosphate, tetrasodium pyrophosphate, sodium alginate, gelatine, flavour, colour or any mixture of two or more of these components.

Another subject of the present invention is the use of the whipping agent of the present invention for making an instant powder for making an instant powder dessert comprising the whipping agent according to the present invention (preferably in an amount of 1 to 70 % by weight (more preferably 10 to 50 % by weight, more preferably 20 to 40 % by weight), optionally further comprising one or more substances selected from the group consisting of sugar, milk powder, a hydrocolloid, a coloring agent and a flavoring agent.

Another subject of the present invention is the use of the whipping agent according to the present invention for making a food that comprises a foam that is obtained by whipping.

Another subject of the present invention is the use of the whipping agent of the present invention for making a food that comprises a foam that is obtained by whipping, wherein the foam comprises the whipping agent according to the present invention (preferably in an amount of 0,1 to 50 % by weight, more preferably 5 to 25 % by weight, more preferably 10 to 20 % by weight), wherein the food optionally further comprises water, milk, milk powder, whey powder, sugar, corn syrup, fructose syrup, starch, modified starch, alginate, carrageenan, locust bean gum, guar gum, xanthan, cellulose, gelatine, agar, pectin, gum Arabic or any mixture of two or more of these components.

The food may be a cake comprising a cake filling which is a foam. The food may be a mousse dessert. In this case the mousse is the foam.

One embodiment of the present invention is the use of the whipping agent for making a food, wherein this food is a cake comprising a cake filling in the form of a foam, or wherein the food is a cream or a mousse dessert.

One embodiment of the present invention is the use of the whipping agent for making a food, wherein the food comprises the foam in an amount of 1 to 90 % by weight (preferably 10 to 80 % by weight, more preferably 20 to 70 % by weight).

One embodiment of the present invention is the use of the whipping agent for making a food, wherein the foam comprises a first phase that is liquid or solid and wherein the foam comprises a second phase that is gaseous and wherein the foam comprises the second phase in an amount of 10 to 80 % by volume (preferably 20 to 70 % by volume, more preferably 30 to 60 % by volume).

Another subject of the present invention is a process for making the whipping agent according to the present invention comprising a) mixing the protein and water so that a first mixture is obtained, b) adding the fat and the emulsifier to the first mixture so that a second mixture is obtained, c) stirring the second mixture, d) spray drying the second mixture so that a powder is obtained and e) optionally cooling the powder.

The terms fat and oil are used as synonyms in the context of the present invention. Fats and oils are both substances consisting of esters of glycerol and fatty acids. I. e. a fat contains fatty acid moieties (R-CO-O-) bound to glycerol moieties ($C_3H_5(OH)_2$ or $C_3H_5(OH)$ or $C_3H_5$)

The at least one protein in the composition according to the present invention may be any protein selected from the group consisting of milk protein, a protein of plant origin, soy protein, casein, sodium caseinate, calcium caseinate, whey protein concentrate, soy protein hydrolysate, pea protein, wheat protein and potato protein.

An unsaturated fatty acid is a fatty acid having at least one double bond between two adjacent carbon atoms. Preferably the unsaturated fatty acid moieties have 4 to 30 carbon atoms.

The whipping agent according to the present invention has many advantages. It contains only a little amount of saturated fatty acids. It may contain no saturated fatty acids at all. It has good whipping properties. It is provided in the form of a powder. It has good sensory properties. It does not have any off-taste. It has good oxidation stability. It has good solubility in cold or warm liquids like water or milk.

If the whipping agent according to the present contains an emulsifier that contains saturated fatty acid moieties which many conventional emulsifiers do then it can be advantageous to have a relatively high amount of fat and a relatively low amount of emulsifier in the whipping agent because in this case the higher the amount of fat in the whipping agent according to the present invention in comparison to the amount of emulsifier in the whipping agent according to the present invention is the lower is the content of saturated fatty acid moieties in the whipping agent according to the present invention.

## Examples

In the examples % is % by weight unless specified otherwise.

Sunflower oil was used as fat (sunflower oil refined and sunflower oil high oleic, both obtainable from the company Gustav Heess GmbH, Germany). The glucose syrup Glucidex® DE 28-32, obtainable from the company Roquette was used, whey protein (Milei 60, obtainable from the company Milei) was used, sodium caseinate (Alanate 180, obtainable from the company NZMP) was used, lactic acid esters of mono- and diglycerides of edible fatty acids were used as emulsifiers (Lamegin® GLP 2410, obtainable from Cognis GmbH, Monheim, Germany), acetic acid esters of mono- and diglycerides of edible fatty acids were used as emulsifiers (Lamegin® EE 30/ EE 40, obtainable from Cognis GmbH, Monheim, Germany), mono-and diglycerids of edible fatty acids were used as emulsifiers (Nutrisoft® 55, Monomuls® 90-018, both obtainable from Cognis GmbH, Monheim, Germany), Polyglycerolmonostearat was used as emulsifier (Propymuls® SPM, obtainable from Cognis GmbH, Monheim, Germany)

Whipping agents having the following compositions have been prepared.

### Example 1 not within scope claimed (WT 7590):

| **fat:** | |
| --- | --- |
| sunflower oil | 28 % |
| **protein:** | |
| whey protein powder | 16 % |
| **emulsifier:** | |
| Lamegin® GLP 2410 | 14 % |
| Nutrisoft® 55 | 3 % |
| **others:** | |

(continued)

| glucose syrup | 37.93 % |
|---|---|
| sodium alginate | 0.25 % |
| tetrapotassium pyrophosphate | 0.8 % |
| antioxidant | 0.02 % |

**Example 2 (WT 7616):**

| **fat:** | |
|---|---|
| sunflower oil | 40 % |
| **protein:** | |
| sodium caseinate | 6 % |
| **emulsifier:** | |
| Lamegin® EE 40 | 20 % |
| Monomuls® 90-018 | 2 % |
| Nutrisoft® 55 | 1 % |
| **others:** | |
| glucose syrup | 29.96 % |
| Monopotassiumphosphat | 0,25 % |
| Dipotassiumphosphat | 0,75 % |
| antioxidant | 0.04 % |

**Example 3 (WT 7618):**

| **fat:** | |
|---|---|
| sunflower oil | 37 % |
| **protein:** | |
| sodium caseinate | 5.5 % |
| **emulsifier:** | |
| Lamegin® EE 30 | 16 % |
| Monomuls® 90-018 | 2 % |
| **others:** | |
| glucose syrup | 39.46 % |
| antioxidant | 0.04 % |

**Example 4 (WT 7668):**

| **fat:** | |
|---|---|
| sunflower oil | 28 % |
| **protein:** | |
| sodium caseinat | 6 % |
| **emulsifier:** | |
| Lamegin® EE 30 | 20 % |
| Nutrisoft® 55 | 1 % |
| Monomuls® 90-018 | 2 % |
| **others:** | |

(continued)

| | |
|---|---|
| glucose syrup | 42.18 % |
| tetrapotassium pyrophosphate | 0.8 % |
| antioxidant | 0.02 % |

**Example 5 (WT 7672):**

| | |
|---|---|
| **fat:** | |
| sunflower oil | 40 % |
| **protein:** | |
| sodium caseinat | 6 % |
| **emulsifier:** | |
| Lamegin® EE 30 | 20 % |
| Nutrisoft® 55 | 1 % |
| Monomuls® 90-018 | 2 % |
| **others:** | |
| glucose syrup | 30.18 % |
| tetrapotassium pyrophosphate | 0.8 % |
| antioxidant | 0.02 % |

**Example 6 (WT 7704):**

| | |
|---|---|
| **fat:** | |
| sunflower oil | 40 % |
| **protein:** | |
| sodium caseinat | 8 % |
| **emulsifier:** | |
| Propymuls® SPM | 20 % |
| **others:** | |
| glucose syrup | 31.96 % |
| antioxidant | 0.02 % |

The whipping agents were tested in typical applications to evaluate their properties. The whipping agents according to examples 1 to 6 were compared to a standard whipping agent according to the state of the art (LQ CE 6630).

**Preparation of foams**

As a basic testing method to evaluate aerating capacity and softness of a foam obtained after whipping a composition comprising a whipping agent the following recipe was used:

35 g whippinig agent, 10 g sugar and 125 ml milk.

The whipping agent and the sugar were poured together in a bowl. After adding the milk the mix was whipped up with a spiral mixer (e.g. a Hobart N 50).

**The relative volumes of the foams were determined as follows:**

A glass dish was weighed before and after filling it with the whipped foam. The difference was the weight of the aerated cream of known volume. This weight was used to calculate the relative volume. The relative volume is expressed as milliliter (ml) per 100 g.

$$\frac{\text{Volume of the dish (ml) x 100}}{\text{weight of the aerated cream (g)}} = \text{relative volume in ml per 100 g}$$

**The softness of the foams was determined as follows:**

The whipped product was filled into a glass dish. A metal disc of a defined weight (88g) was placed directly above the foam surface without touching it. The disc was then dropped into the foam for 10 seconds. The distance, the disc penetrates into the foam, was measured in Penetrometer Units (PE units). The softer the foam was, the deeper the disc penetrated and the higher the PE value was. PE was determined immediately after the preparation of the foam ("PE 88 g fresh") and after cooling the foam for 30 minutes ("PE 88 g 30 min refrigeration").

**The following food products comprising a foam that was obtained as described above were made and tested:**

A Vanilla Dessert:

| | |
|---|---|
| whip topping (= foam) | 30 g |
| sugar | 40 g |
| potatoe starch | 4 g |
| instant gelatine | 6 g |
| flavour | 1 g |
| milk | 200 ml |

A Chocolate Mousse Dessert:

| | |
|---|---|
| whip topping (= foam) | 30 g |
| Sugar | 49.9 g |
| potatoe starch | 5 g |
| instant gelatine | 6 g |
| cocoa powder | 14 g |
| inulin | 5 g |
| flavour | 0.15 g |
| milk | 200 ml |

A low pH Dessert:

| | |
|---|---|
| whip topping (= foam) | 35 g |
| sugar | 69.6 g |
| potatoe starch | 3 g |
| instant gelatine | 5 g |
| citric acid | 1 g |
| color (2 %) | 1 g |
| flavour | 0.43 g |
| milk | 200 ml |

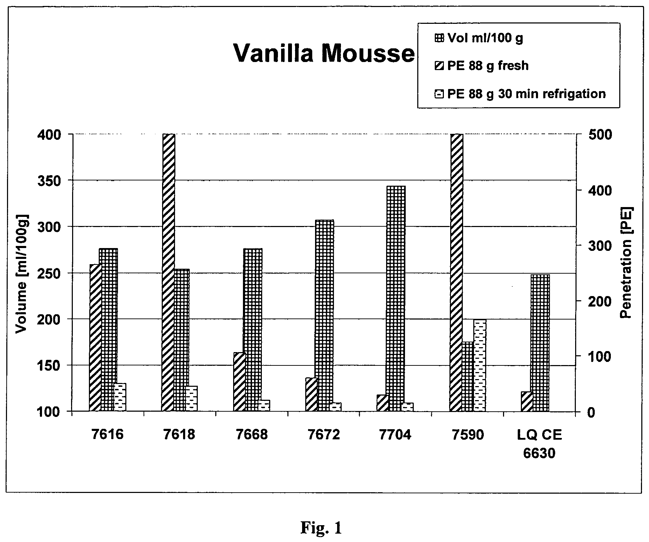

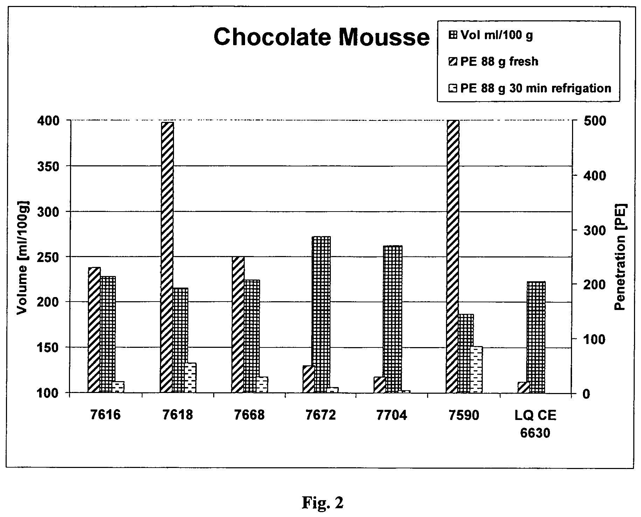

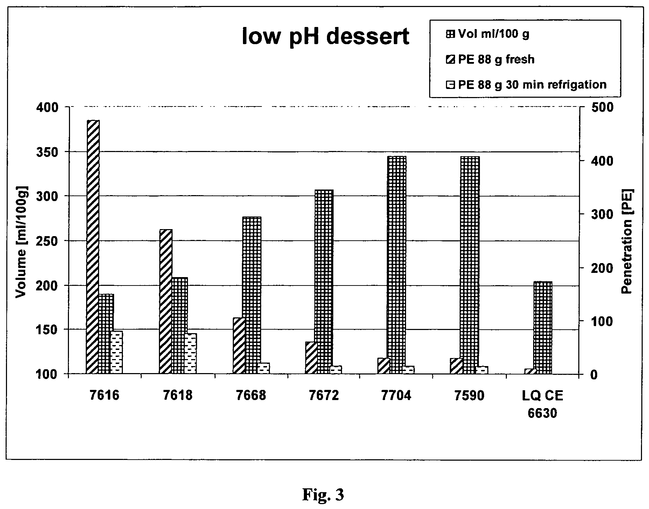

The results are shown in fig. 1 to 3. Volume and stability (penetration) of the foams obtained with the whipping agents according to the present invention are on a typical level compared to the foam obtained with the whipping agent according to the state of the art (Lamequick® CE 6630, abbreviated LQ CE 6630). The value of "PE 88 g 30 min refrigeration" is zero in all three figures in the case of LQ CE 6630. "Typical level" means a volume of about 200 ml per 100 g and a high value of "PE 88 g fresh" (i. e. the freshly prepared foam is soft) that becomes lower after 30 min refrigeration (i. e. the foam becomes harder).

**Claims**

1.  A whipping agent comprising

    (a) at least one fat, wherein the amount of fat present in the whipping agent is at least 20 % by weight, and wherein the fat is liquid at a temperature of 20 °C, and wherein the amount of unsaturated fatty acid moieties present in the fat is at least 50 % by weight of all fatty acid moieties present in the fat,
    (b) at least one protein, wherein the amount of protein present in the whipping agent is 3 to 10 % by weight of the whipping agent, and wherein the protein is selected from the group consisting of milk protein, a protein of plant origin, soy protein, casein, sodium caseinate, calcium caseinate, whey protein concentrate, soy protein hydrolysate, pea protein, wheat protein and potato protein, and
    (c) at least one emulsifier, wherein the at least one emulsifier is different from the at least one protein, and wherein the amount of all emulsifiers present in the whipping agent is at least 5 % by weight of the whipping agent, and wherein the emulsifier is selected from the group consisting of a monoglyceride of a fatty acid wherein the fatty acid is either saturated or unsaturated and wherein the fatty acid has 6 to 30 carbon atoms, a diglyceride of two fatty acids wherein both fatty acids, independently of each other, are either saturated or unsaturated and have 6 to 30 carbon atoms, a polyglycerol ester of a fatty acid wherein the fatty acid is either saturated or unsaturated and wherein the fatty acid has 6 to 30 carbon atoms, preferably a polyglycerol monostearate, an acetic acid ester of a monoglyceride of a fatty acid wherein the fatty acid is either saturated or unsaturated and wherein the fatty acid has 6 to 30 carbon atoms, a lactic acid ester of a monoglyceride of a fatty acid wherein the fatty acid is either saturated or unsaturated and wherein the fatty acid has 6 to 30 carbon atoms, a citric acid ester of a monoglyceride of a fatty acid wherein the fatty acid is either saturated or unsaturated and wherein the fatty acid has 6 to 30 carbon atoms, a diacetyl tartaric acid ester of a monoglyceride of a fatty acid wherein the fatty acid is either saturated or unsaturated and wherein the fatty acid has 6 to 30 carbon atoms, lecithin and any mixture of two or more of said emulsifiers,

    wherein the whipping agent is a powder.

2.  The whipping agent according to claim 1, wherein this whipping agent is a powder obtainable by spray-drying.

3.  The whipping agent according to any of claims 1 to 2, wherein the fat is selected from the group consisting of sunflower oil, soy bean oil, rape seed oil, olive oil, safflower oil and fish oil.

4.  The whipping agent according to any of claims 1 to 3, further comprising mono potassium phosphate, dipotassium phosphate, tetrasodium pyrophosphate, sodium alginate, gelatine, flavour, colour or any mixture of two or more of these components.

5.  Use of the whipping agent according to any of claims 1 to 4 for making an instant powder for making an instant powder dessert, the instant powder comprising the whipping agent and optionally further one or more substances selected from the group consisting of sugar, milk powder, a hydrocolloid, a coloring agent and a flavoring agent.

6.  A process for making the whipping agent according to any of claims 1 to 4 comprising a) mixing the protein and water so that a first mixture is obtained, b) adding the fat and the emulsifier to the first mixture so that a second mixture is obtained, c) stirring the second mixture, d) spray drying the second mixture so that a powder is obtained and e) optionally cooling the powder.

7.  The use of the whipping agent according to any of claims 1 to 4 for making a food that comprises a foam that is obtained by whipping.

8.  The use according to claim 7, wherein the food optionally further comprises water, milk, milk powder, whey powder, sugar, corn syrup, fructose syrup, starch, modified starch, alginate, carrageenan, locust bean gum, guar gum, xanthan, cellulose, gelatine, agar, pectin, gum Arabic or any mixture of two or more of these components.

9.  The use according to claim 7 or 8, wherein this food is a cake comprising a cake filling in the form of the foam, or wherein the food is a cream or a mousse dessert.

10. The use according to any of claims 7 to 9, wherein the food comprises the foam in an amount of 1 to 90 % by weight.

**11.** The use according to any of claims 7 to 10, wherein the foam comprises a first phase that is liquid or solid and wherein the foam comprises a second phase that is gaseous and wherein the foam comprises the second phase in an amount of 10 to 80 % by volume.

**Patentansprüche**

**1.** Aufschlagmittel, das Folgendes umfasst

(a) mindestens ein Fett, wobei die Menge an Fett, welche in dem Aufschlagmittel vorliegt, mindestens 20 Gewichts-% beträgt und wobei das Fett bei einer Temperatur von 20 °C flüssig ist, und wobei die Menge an ungesättigten Fettsäuregruppen, welche in dem Fett vorliegt, mindestens 50 Gewichts-% sämtlicher Fettsäuregruppen ausmacht, die in dem Fett vorliegen,
(b) mindestens ein Protein, wobei die Menge an Protein, welche in dem Aufschlagmittel vorliegt, 3 bis 10 Gewichts-% des Aufschlagmittels ausmacht, und wobei das Protein aus der Gruppe ausgewählt ist, die aus Milchprotein, einem Protein pflanzlichen Ursprungs, Sojaprotein, Kasein, Natriumkaseinat, Calciumkaseinat, Molkeproteinkonzentrat, Sojaproteinhydrolysat, Erbsenprotein, Weizenprotein und Kartoffelprotein besteht, und
(c) mindestens einen Emulgator, wobei der mindestens eine Emulgator sind von dem mindestens einen Protein unterscheidet, und wobei die Menge sämtlicher Emulgatoren, die in dem Aufschlagmittel vorliegt, mindestens 5 Gewichts-% des Aufschlagmittels ausmacht, und wobei der Emulgator aus der Gruppe ausgewählt ist, die aus einem Monoglycerid einer Fettsäure, wobei die Fettsäure entweder gesättigt oder ungesättigt ist und wobei die Fettsäure 6 bis 30 Kohlenstoffatome aufweist, einem Diglycerid zweier Fettsäuren, wobei die beiden Fettsäuren, unabhängig voneinander, entweder gesättigt oder ungesättigt sind und 6 bis 30 Kohlenstoffatome aufweisen, einem Polyglycerinester einer Fettsäure, wobei die Fettsäure entweder gesättigt oder ungesättigt ist und wobei die Fettsäure 6 bis 30 Kohlenstoffatome aufweist, wobei es sich vorzugsweise um ein Polyglycerinmonostearat handelt, einem Essigsäureester eines Monoglycerids einer Fettsäure, wobei die Fettsäure entweder gesättigt oder ungesättigt ist und wobei die Fettsäure 6 bis 30 Kohlenstoffatome aufweist, einem Milchsäureester eines Monoglycerids einer Fettsäure, wobei die Fettsäure entweder gesättigt oder ungesättigt ist und wobei die Fettsäure 6 bis 30 Kohlenstoffatome aufweist, einem Citronensäureester eines Monoglycerids einer Fettsäure, wobei die Fettsäure entweder gesättigt oder ungesättigt ist und wobei die Fettsäure 6 bis 30 Kohlenstoffatome aufweist, einem Diacetylweinsäureester eines Monoglycerids einer Fettsäure, wobei die Fettsäure entweder gesättigt oder ungesättigt ist und wobei die Fettsäure 6 bis 30 Kohlenstoffatome aufweist, aus Lecithin und aus einer beliebigen Mischung von mindestens zweien dieser Emulgatoren besteht.

wobei es sich bei dem Aufschlagmittel um ein Pulver handelt.

**2.** Aufschlagmittel gemäß Anspruch 1, wobei es sich bei dem Aufschlagmittel um ein Pulver handelt, das mittels Sprühtrocknen erhalten werden kann.

**3.** Aufschlagmittel gemäß einem beliebigen der Ansprüche 1 bis 2, wobei das Fett aus der Gruppe ausgewählt ist, die aus Sonnenblumenöl, Sojaöl, Rapsöl, Olivenöl, Distelöl und Fischöl besteht.

**4.** Aufschlagmittel gemäß einem beliebigen der Ansprüche 1 bis 3, welches weiterhin Monokaliumphosphat, Dikaliumphosphat, Tetranatriumpyrophosphat, Natriumalginat, Gelatine, Aroma, Farbstoff oder beliebige Mischungen aus mindestens zweien dieser Bestandteile umfasst.

**5.** Verwendung des Aufschlagmittels gemäß einem beliebigen der Ansprüche 1 bis 4 zur Herstellung eines löslichen Pulvers zur Herstellung einer Nachspeise aus löslichem Pulver, wobei das lösliche Pulver das Aufschlagmittel und möglicherweise darüber hinaus eine oder mehrere Substanzen umfasst, die aus der Gruppe ausgewählt sind, welche aus Zucker, Milchpulver, einem Hydrokolloid, einem Farbstoff um einem Aromastoff besteht.

**6.** Verfahren zur Herstellung des Aufschlagmittels gemäß einem der Ansprüche 1 bis 4, wobei dieses a) das Vermischen des Proteins mit Wasser, sodass eine erste Mischung erhalten wird, b) das Hinzufügen des Fetts und des Emulgators zu der ersten Mischung, sodass eine zweite Mischung erhalten wird, c) das Rühren der zweiten Mischung, d) das Sprühtrocknen der zweiten Mischung, sodass ein Pulver erhalten wird, und e) möglicherweise das Abkühlen des Pulvers umfasst.

**7.** Verwendung des Aufschlagmittels gemäß einem beliebigen der Ansprüche 1 bis 4, um ein Lebensmittel herzustellen, das einen Schaum umfasst, welcher durch Aufschlagen erhalten wird.

8. Verwendung gemäß Anspruch 7, wobei das Lebensmittel möglicherweise darüber hinaus Wasser, Milch, Milchpulver, Molkepulver, Zucker, Maissirup, Fructosesirup, Stärke, modifizierte Stärke, Alginat, Carrageen, Johannisbrotkernmehl, Guarkernmehl, Xanthan, Cellulose, Gelatine, Agar-Agar, Pektin, Gummi arabicum oder eine beliebige Mischung aus mindestens zweien dieser Bestandteile umfasst.

9. Verwendung gemäß Anspruch 7 oder 8, wobei es sich bei dem Lebensmittel um einen Kuchen handelt, der eine Kuchenfüllung in Form des Schaums umfasst, oder wobei es sich bei dem Lebensmittel um eine Creme oder eine Mousse-Nachspeise handelt.

10. Verwendung gemäß einem beliebigen der Ansprüche 7 bis 9, wobei das Lebensmittel den Schaum in einer Menge von 1 bis 90 Gewichts-% umfasst.

11. Verwendung gemäß einem beliebigen der Ansprüche 7 bis 10, wobei der Schaum eine erste Phase umfasst, welche flüssig oder fest ist, und wobei der Schaum eine zweite Phase umfasst, welche gasförmig ist, und wobei der Schaum die zweite Phase in einer Menge von 10 bis 80 Volumen-% umfasst.

**Revendications**

1. Agent moussant comprenant

(a) au moins une matière grasse, dans lequel la quantité de matière grasse présente dans l'agent moussant est au moins égale à 20 % en poids, et dans lequel la matière grasse est liquide à une température de 20 °C, et dans lequel la quantité de fractions d'acides gras insaturés présentes dans la matière grasse est au moins égale à 50 % en poids de toutes les fractions d'acides gras présentes dans la matière grasse,
(b) au moins une protéine, dans lequel la quantité de protéine présente dans l'agent moussant est égale à 3 à 10 % en poids de l'agent moussant, et dans lequel la protéine est choisie dans le groupe constitué des protéines du lait, d'une protéine d'origine végétale, des protéines de soja, de la caséine, du caséinate de sodium, du caséinate de calcium, du concentré protéique de lactosérum, de l'hydrolysat de protéines de soja, des protéines de pois, des protéines de blé et des protéines de pomme de terre, et
(c) au moins un émulsifiant, dans lequel le ou les émulsifiants sont différents de la ou des protéines, et dans lequel la quantité de tous les émulsifiants présents dans l'agent moussant est au moins égale à 5 % en poids de l'agent moussant, et dans lequel l'émulsifiant est choisi dans le groupe constitué d'un monoglycéride d'un acide gras, dans lequel l'acide gras est soit saturé soit insaturé et dans lequel l'acide gras comporte 6 à 30 atomes de carbone, d'un diglycéride de deux acides gras, dans lequel les deux acides gras, indépendamment l'un de l'autre, sont soit saturés soit insaturés et comportent 6 à 30 atomes de carbone, d'un ester de polyglycérol d'un acide gras dans lequel l'acide gras est soit saturé soit insaturé et dans lequel l'acide gras comporte 6 à 30 atomes de carbone, de préférence d'un monostéarate de polyglycérol, d'un ester acétique d'un monoglycéride d'acide gras dans lequel l'acide gras est soit saturé soit insaturé et dans lequel l'acide gras comporte 6 à 30 atomes de carbone, d'un ester lactique d'un monoglycéride d'un acide gras dans lequel l'acide gras est soit saturé soit insaturé et dans lequel l'acide gras comporte 6 à 30 atomes de carbone, d'un ester citrique d'un monoglycéride d'un acide gras dans lequel l'acide gras est soit saturé soit insaturé et dans lequel l'acide gras comporte 6 à 30 atomes de carbone, d'un ester diacétyltartrique d'un monoglycéride d'un acide gras dans lequel l'acide gras est soit saturé soit insaturé et dans lequel l'acide gras comporte 6 à 30 atomes de carbone, de la lécithine et d'un quelconque mélange de deux ou plus desdits émulsifiants,

dans lequel l'agent moussant est une poudre.

2. Agent moussant selon la revendication 1, dans lequel l'agent moussant est une poudre pouvant être obtenue par séchage par pulvérisation.

3. Agent moussant selon l'une quelconque des revendications 1 à 2, dans lequel la matière grasse est choisie dans le groupe constitué de l'huile de tournesol, de l'huile de soja, de l'huile de colza, de l'huile d'olive, de l'huile de carthame et de l'huile de poisson.

4. Agent moussant selon l'une quelconque des revendications 1 à 3, comprenant en outre du phosphate monopotassique, du phosphate dipotassique, du pyrophosphate tétrapotassique, de l'alginate de sodium, de la gélatine, un aromatisant, un colorant ou un quelconque mélange de deux ou plus de ces composants.

5. Utilisation de l'agent moussant selon l'une quelconque des revendications 1 à 4 pour la fabrication d'une poudre instantanée pour la production d'un dessert à base de poudre instantanée, la poudre instantanée comprenant l'agent moussant et éventuellement en outre une ou plusieurs substances choisies dans le groupe constitué du sucre, du lait en poudre, d'un hydrocolloïde, d'un agent colorant et d'un agent aromatisant.

6. Procédé de fabrication de l'agent moussant selon l'une quelconque des revendications 1 à 4 comprenant a) le mélange de la protéine et de l'eau en vue de l'obtention d'un premier mélange, b) l'addition de la matière grasse et de l'émulsifiant au premier mélange en vue de l'obtention d'un second mélange, c) l'agitation du second mélange, d) le séchage par pulvérisation du second mélange en vue de l'obtention d'une poudre et e) éventuellement le refroidissement de la poudre.

7. Utilisation de l'agent moussant selon l'une quelconque des revendications 1 à 4 pour la fabrication d'un aliment qui comprend une mousse obtenue par fouettage.

8. Utilisation selon la revendication 7, dans laquelle l'aliment comprend éventuellement en outre de l'eau, du lait, du lait en poudre, du lactosérum en poudre, du sucre, du sirop de maïs, du sirop de fructose, de l'amidon, de l'amidon modifié, de l'alginate, du carraghénane, de la gomme de caroube, de la gomme de guar, du xanthane, de la cellulose, de la gélatine, de la gélose, de la pectine, de la gomme arabique ou un quelconque mélange de deux ou plus de ces composants.

9. Utilisation selon la revendication 7 ou 8, dans laquelle cet aliment est un gâteau comprenant une garniture pour gâteau se présentant sous la forme de la mousse, ou dans laquelle l'aliment est une mousse ou une crème dessert.

10. Utilisation selon l'une quelconque des revendications 7 à 9, dans laquelle l'aliment comprend la mousse à hauteur de 1 à 90 % en poids.

11. Utilisation selon l'une quelconque des revendications 7 à 10, dans laquelle la mousse comprend une première phase qui est liquide ou solide et dans laquelle la mousse comprend une seconde phase qui est gazeuse et dans laquelle la mousse comprend la seconde phase à hauteur de 10 à 80 % en volume.

Fig. 1

**Fig. 2**

Fig. 3

**EP 2 337 458 B1**

**REFERENCES CITED IN THE DESCRIPTION**

**Patent documents cited in the description**

- US 3628968 A
- WO 0249445 A
- EP 1728437 A1
- EP 1723852 A1